(19) Europäisches Patentamt
European Patent Office
Office européen des brevets

(11) **EP 2 641 943 B1**

(12) **EUROPEAN PATENT SPECIFICATION**

(45) Date of publication and mention
of the grant of the patent:
**11.01.2017 Bulletin 2017/02**

(51) Int Cl.:
***D06P 5/30*** *(2006.01)*     ***C09D 11/102*** *(2014.01)*
***C09D 11/38*** *(2014.01)*     ***C09D 11/322*** *(2014.01)*

(21) Application number: **13159806.2**

(22) Date of filing: **18.03.2013**

(54) **Ink composition for ink jet textile printing**

Tintenzusammensetzung für Tintenstrahltextildruck

Composition d'encre pour impression textile à jet d'encre

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.03.2012 JP 2012066003**

(43) Date of publication of application:
**25.09.2013 Bulletin 2013/39**

(73) Proprietor: **Seiko Epson Corporation
Shinjuku-ku
Tokyo (JP)**

(72) Inventors:
• **Saito, Toru**
 **Suwa-shi, Nagano 392-8502 (JP)**
• **Furue, Makoto**
 **Suwa-shi, Nagano 392-8502 (JP)**
• **Ohashi, Masakazu**
 **Suwa-shi, Nagano 392-8502 (JP)**
• **Mitsuzawa, Kana**
 **Suwa-shi, Nagano 392-8502 (JP)**

(74) Representative: **Miller Sturt Kenyon
9 John Street
London WC1N 2ES (GB)**

(56) References cited:
**EP-A1- 2 028 242**     **WO-A1-01/96121**
**JP-A- 2008 095 089**     **JP-A- 2010 018 741**
**US-A1- 2004 182 273**

Remarks:
The file contains technical information submitted after the application was filed and not included in this specification

**EP 2 641 943 B1**

**Description**

The present invention relates to an ink composition for ink jet textile printing.

A variety of recording techniques have been traditionally utilized to form images on recording media, such as a sheet, on the basis of image data signals. In an ink jet technique, an image is directly formed on a recording medium by ejecting ink only to a predetermined site with an inexpensive apparatus, which enables effective use of ink and a decrease in running costs. Such an ink jet technique is a highly practical recording technique also in terms of small noise during a recording process.

In recent years, attempts have been made to utilize an ink jet recording technique, in which ink is ejected onto a recording medium to form highly glossy images having satisfactory water resistance and abrasion resistance on a recording surface of the recording medium.

JP-A-2008-95089, for example, discloses black ink composed of a dispersion of a carbon black pigment subjected to surface treatment (solid content, 8 weight%), an emulsion of an acrylic-silicone resin (solid content, 4 weight%, particle size of 130 nm, minimum filming temperature of 0°C, and pH ranging from 7 to 8), diethylene glycol (18 weight%), glycerine (6 weight%), 2-pyrrolidone (2 weight%), Zonyl FSN-100 (fluorine surfactant commercially available from E. I. du Pont de Nemours and Company, 1 weight%), 2,2,4-trimethyl-1,3-pentanediol (2 weight%), and ion-exchanged water added to adjust the total weight% of the components in 100 weight% (see, paragraphs 0127, 0140, and 0145 in JP-A-2008-95089).

JP-T-10-501006, for instance, discloses a technique in which a predetermined ink composition which needs to be non-aqueous is used to print a message on a white nylon socks and then the socks are colored in black. Such a predetermined ink composition is composed of ethanol modified with isopropyl alcohol and n-propyl acetate (solvent, Duplicating Fluid 100C.NPA commercially available from Petro Products, 63.7 weight%), a solution of a high-molecular-weight unsaturated polycarboxylic acid/polysiloxane copolymer (dispersant, BYK-P-104S commercially available from BYK Japan KK, 0.3 weight%), a silicone resin (cross-linked silicone varnish, DC6-2230 commercially available from Dow Corning Corp., 13.0 weight%), a chip containing a titanium dioxide pigment and acrylic binder resin (Acroverse 91 W135C commercially available from Penn Color, Inc., 20.0 weight%), N-ethyl-o/p-toluenesulfonamide (plasticizer, Santicizer 8 commercially available from Monsanto Company, 1.5 weight%), and potassium thiocyanate (1.5 weight%) (see, lines 1 to 3 and 18 to 19 on page 9, line 26 on page 9 to line 2 on page 10, lines 12 to 14 and lines 18 to 21 on page 10, and Example 1 in JP-T-10-501006).

JP-A-2006-124855, for example, discloses a deep color processing method which involves providing an ink jet printer with a predetermined deep color-processing liquid and magenta ink, ejecting the magenta ink to polyester fabric subjected to pretreatment with a pretreatment agent (cationic polymer compound and guar gum) to form a unicolor magenta patch, ejecting the deep color-processing liquid to the magenta patch, heating the fabric at 180°C for 10 min, and washing the heated fabric with water, and drying the washed fabric. In this case, such a predetermined color-processing liquid is composed of amino-modified silicone (Polon MF-14 commercially available from Shin-Etsu Chemical Co., Ltd., active component 15%, 3 parts), ethylene glycol (20 parts), glycerine (10 parts), Proxel GXL(D) (commercially available from Arch Chemicals, Inc., 0.01 parts), and ion-exchanged water (69 parts). Such a predetermined magenta ink is composed of a predetermined dispersion (20 parts), ethylene glycol (20 parts), glycerine (10 parts), Proxel GXL(D) (commercially available from Arch Chemicals, Inc., 0.01 parts), and ion-exchanged water (50 parts) (see paragraphs 0082, 0084 to 0086, and 0091 to 0094 in JP-A-2006-124855).

Printed matters produced as a result of application of the inks disclosed in JP-A-2008-95089, JP-T-10-501006, and JP-A-2006-124855 onto fabric being a recording medium by an ink jet technique, however, have a problem in terms of at least any one of the long-term stability of ink and the abrasion resistance and flexibility of the printed matter.

An advantage of some aspects of the invention is that it provides an ink composition for ink jet textile printing, the ink composition exhibiting satisfactory long-term stability and imparting satisfactory abrasion resistance and flexibility to printed fabric.

The inventors have been intensively studied to overcome the problems described above. The inventors have finally found that the above-mentioned problems can be thoroughly overcome by an ink composition for ink jet textile printing which contains a predetermined amount of emulsion-type silicone compound, a predetermined amount of urethane resin emulsion, and water and then accomplished the invention.

The invention has the following aspect.

An aspect of the invention provides an ink composition for ink jet textile printing, the ink jet composition containing a pigment, a urethane resin emulsion, an emulsion-type silicone compound, and water, wherein the urethane resin emulsion content is 3.5 to 14 mass% relative to the total mass of the ink composition, the emulsion-type silicone compound content is in the range of 0.4 to 3.0 mass% relative to the total mass of the ink composition, and the water content is in the range of 20 to 80 mass% relative to the total mass of the ink composition.

It is preferable that the emulsion-type silicone compound be at least one material selected from an amino-modified silicone emulsion, an epoxy-modified silicone emulsion, a dimethyl silicone emulsion, and a reactive silicone emulsion.

It is preferable that the pigment be a white pigment.

It is preferable that the urethane resin emulsion content be in the range of 7 to 14 mass% relative to the total mass of the ink composition.

It is preferable that the ink composition for ink jet textile printing further contain 2-pyrrolidone in an amount of not less than 1 mass% relative to the total mass of the ink composition.

Embodiments of the invention will now be described in detail, by way of example only. The invention should not be limited to the embodiments described below and can be variously modified within the scope of the invention.

The term "ink jet textile printing" herein means that ink is applied onto fabric being a kind of recording media by an ink jet technique (printing), namely, a kind of ink jet recording. The term "recorded matter" herein refers to a product yielded as a result of applying ink onto a recording medium to form an image. The term "printed fabric" is a product yielded as a result of applying ink onto fabric being a kind of recording media to form an image, which is included in the recorded matter. The term "non-white" means other colors than white.

The term "long-term stability" herein means that ink has low viscosity and exhibits satisfactory preservation stability. The term "preservation stability" herein refers to a characteristic of ink, in which the viscosity of ink is less likely to change after the ink is preserved at 60°C for 7 days. The term "abrasion resistance" herein refers to a characteristic in which rubbing an image is less likely to cause peeling of the image from fabric and damage of the image. The term "flexibility" herein refers to a characteristic in which pulling a recorded matter is less likely to cause cracks in an image. The term "color development" herein refers to a characteristic in which ink applied onto fabric exhibits high efficiency of coloring and the ink exhibits sufficient coloration. The term "fastness to washing" herein refers to a characteristic in which the degree of discoloration of printed fabric by washing is small.

The term "(meth)acrylate" herein refers to at least any one of acrylate and methacrylate corresponding thereto. The term "(meth)acryl" herein refers to at least any one of acryl and methacryl corresponding thereto. The term "(meth)acryloyl" herein refers to at least any one of acryloyl and methacryloyl corresponding thereto. Ink Composition for Ink Jet Textile Printing

An embodiment of the invention relates to an ink composition for ink jet textile printing (hereinafter referred to as "ink composition" or "ink"). The ink composition for ink jet textile printing contains a pigment, a urethane resin emulsion (3.5 to 14 mass%), an emulsion-type silicone compound (0.4 to 3.0 mass%), and water (20 to 80 mass%).

Additives (components) which are contained or optionally contained in the ink composition will now be described in detail.

Pigment

The ink composition of the present embodiment contains a pigment. The pigment can be appropriately selected depending on the color of ink, namely, white ink or non-white ink. The pigment to be used may be an inorganic or organic pigment.

The ink composition of the present embodiment is preferably applied to fabric in an amount of not less than 100 mg/inch$^2$ but is not limited thereto. Such an ink composition is, for example, a white ink composition used to impart a shielding property to fabric or to form a base layer onto which a non-white ink is applied. Hence, the ink composition of the present embodiment preferably contains a white pigment.

The present embodiment will now be described with reference to an ink composition composed of a white pigment.

In the case where a white ink composition is used to impart a shielding property to fabric or to form a base layer onto which a non-white ink is applied, the amount of applied ink becomes remarkably larger than the amount of a non-white ink composition to be used, which leads to an increase in the thickness of a coating film of the ink (image) formed on fabric. The amount of the white ink composition applied to fabric is preferably not less than 100 mg/inch$^2$, more preferably not less than 150 mg/inch$^2$, which can increase the shielding property as described above. The ink composition of the present embodiment containing an emulsion-type silicone compound which will be described later enables production of printed fabric having satisfactory flexibility even in the case where a coating film (image) formed on fabric has increased thickness.

Examples of the white pigment contained in the white ink composition include, but are not limited to, white inorganic pigments such as titanium oxide, zinc oxide, zinc sulfide, antimony oxide, and zirconium oxide. In place of the white inorganic pigments, white organic pigments such as white hollow resin particles and polymer particles may be used.

Examples of the specific color index (C.I.) of the white pigment include, but are not limited to, C.I. Pigment Whites 1 (basic lead carbonate), 4 (zinc oxide), 5 (mixture of zinc sulfide and barium sulfate), 6 (titanium dioxide), 6:1 (titanium dioxide containing another metallic oxide), 7 (zinc sulfide), 18 (calcium carbonate), 19 (clay), 20 (titanated mica), 21 (barium sulfate), 22 (natural barium sulfate), 23 (gloss white), 24, (alumina white), 25 (gypsum), 26 (magnesium oxide and silica oxide), 27 (silica), and 28 (anhydrous calcium silicate).

Among these, preferred is titanium dioxide which provides satisfactory color development, shielding property, dispersed particle size, and visibility (brightness).

Preferred titanium dioxide is rutile-type titanium dioxide which is generally used as a white pigment. The rutile-type titanium dioxide may be synthesized, or commercially available products may be used. The rutile-type titanium dioxide (in the form of powder) can be synthesized by a traditional industrial method, such as a sulfuric acid method or a chlorine method.

Examples of commercially available products of rutile-type titanium dioxide include Tipaque (registered trademark), CR-60-2, CR-67, R-980, R-780, R-850, R-630, R-670, and PF-736 (commercially available from ISHIHARA SANGYO KAISHA, LTD.).

The titanium dioxide has a 50% average particle size (hereinafter referred to as "D50") that is preferably in the range of 50 to 500 nm, more preferably in the range of 150 to 350 nm. The titanium dioxide having a D50 within these ranges enables printed fabric (image formed thereon) to exhibit satisfactory abrasion resistance and high visibility of the image, which enables formation of an image with high quality.

The term "50% average particle size of titanium dioxide" herein does not mean the D50 of titanium dioxide before preparation of the ink composition but means the D50 of titanium dioxide contained in the ink composition. The term "50% average particle size" herein refers to an equivalent spherical 50% average particle size obtained through dynamic light scattering, and such a 50% average particle size can be obtained in the manner described below.

Particles in a dispersion medium are irradiated with light, and then diffracted light and scattered light are analyzed with detectors disposed in front of, in the rear of, and by the side of the dispersion medium. It is assumed that particles originally having an irregular shape have a spherical shape on the basis of the obtained analytical value. A cumulative curve is determined on the basis of the assumption that the total volume of a group of particles assumed as spheres having a volume equal to that of the original particles is 100%, and a point of the cumulative value of 50% is defined as "equivalent spherical 50% average particle size obtained through dynamic light scattering".

The titanium dioxide used as the white pigment is preferably subjected to surface treatment with alumina-silica to reduce photocatalysis. The degree of surface treatment (amount of alumina-silica) preferably ranges from approximately 5 to 20 mass% relative to the total mass (100 mass%) of the white pigment subjected to the surface treatment.

Examples of the non-white ink composition include, but are not limited to, color inks, black ink, and gray ink. Examples of the color inks include, but are not limited to, cyan ink, magenta ink, yellow ink, light cyan ink, light magenta ink, light yellow ink, red ink, green ink, and blue ink.

Examples of the non-white pigment contained in the non-white ink composition (namely, pigments other than white pigment) includes, but are not limited to, organic pigments composed of azo compounds, phthalocyanine, dyes, fused polycyclic compounds, nitro compounds, or nitroso compounds (e.g., brilliant carmine 6B, lake red C, watching red, disazo yellow, Hansa yellow, phthalocyanine blue, phthalocyanine green, alkali blue, and aniline black); and inorganic pigments such as metal (e.g., cobalt, iron, chromium, copper, zinc, lead, titanium, vanadium, manganese, and nickel), metallic oxide and sulfide, carbon black (e.g., furnace carbon black, lamp black, acetylene black, and channel black, such as C.I. Pigment Black 7), Chinese yellow, ultramarine blue, and Prussian blue.

Specific examples of the carbon black contained in back ink include MITSUBISHI Carbon Blacks No.2300, No.900, MCF88, No.33, No.40, No.45, No.52, MA7, MA8, MA100, and No.2200B (commercially available from Mitsubishi Chemical Corporation); Ravens 5750, 5250, 5000, 3500, 1255, and 700 (commercially available from Columbian Chemicals Company); Regals 400R, 330R, and 660R, Mogul L, Monarchs 700, 800, 880, 900, 1000, 1100, 1300, and 1400 (commercially available from Cabot Corporation); and Color Blacks FW1, FW2, FW2V, FW18, FW200, S150, S160, and S170, Printexes 35, U, V, and 140U, Special Blacks 6, 5, 4A, and 4 (manufactured by Degussa).

Examples of a pigment contained in the yellow ink include C.I. Pigment Yellows 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

Examples of a pigment contained in the magenta ink include C.I. Pigment Reds 1, 2, 3, 4, 5, 6, 7, 8, 9, 10, 11, 12, 14, 15, 16, 17, 18, 19, 21, 22, 23, 30, 31, 32, 37, 38, 40, 41, 42, 48(Ca), 48(Mn), 57(Ca), 57:1, 88, 112, 114, 122, 123, 144, 146, 149, 150, 166, 168, 170, 171, 175, 176, 177, 178, 179, 184, 185, 187, 202, 209, 219, 224, and 245; and C.I. Pigment Violets 19, 23, 32, 33, 36, 38, 43, and 50.

Examples of a pigment contained in the cyan ink include C.I. Pigment Blues 1, 2, 3, 15, 15:1, 15:2, 15:3, 15:34, 15:4, 16, 18, 22, 25, 60, 65, and 66; and C.I. Vat Blues 4 and 60.

Examples of pigments other than the magenta, cyan, and yellow pigments include C.I. Pigment Greens 7 and 10; C.I. Pigment Browns 3, 5, 25, and 26; and C.I. Pigment Oranges 1, 2, 5, 7, 13, 14, 15, 16, 24, 34, 36, 38, 40, 43, and 63.

Depending on the type of pigment to be used, the pigment content is preferably in the range of 1 to 30 mass%, more preferably 1 to 15 mass% relative to the total mass (100 mass%) of the ink composition in view of satisfactory color development. Since titanium dioxide is less likely to be precipitated and provides a satisfactory shielding property and color reproducibility (especially on black fabric), the titanium dioxide content is preferably in the range of 1 to 20 mass%, more preferably 5 to 13 mass% relative to the total mass (100 mass%) of the ink composition.

The above-mentioned white pigments and non-white pigments may be used alone or in combination or may be used together.

Within the scope of the invention, the non-white ink composition may contain a white pigment, and the white ink composition may contain a non-white pigment.

Pigment Dispersion

The pigment is desirably dispersed in the ink composition, in other words, contained as a pigment dispersion. The term "pigment dispersion" herein used include a pigment-dispersed liquid and slurry of a pigment (aqueous dispersion having low viscosity).

The pigment dispersion preferably has a D50 ranging from 50 nm to 1 $\mu$m. At a D50 of not less than 50 nm, printed fabric exhibits satisfactory color development. At a D50 of not more than 1 $\mu$m, ink is sufficiently fixed. A dispersion of the white pigment has a D50 that is preferably in the range of 100 to 600 nm, more preferably in the range of 200 to 500 nm. At a D50 of not less than 100 nm, a satisfactory shielding property and color development are provided. At a D50 of not more than 600 nm, ink is sufficiently fixed and stably ejected. A dispersion of the non-white pigment has a D50 that is preferably in the range of 70 nm to 230 nm, more preferably 80 nm to 130 nm.

Examples of the pigment dispersion include, but are not limited to, self-dispersing pigments and polymer-dispersed pigments.

1. Self-dispersing Pigment

Self-dispersing pigments can be dispersed or dissolved in an aqueous solvent without a dispersant. The term "dispersed or dissolved in an aqueous solvent without a dispersant" herein means a state in which a hydrophilic group on a surface of a pigment enables the pigment to stably exist in an aqueous solvent without use of a dispersant which serves to disperse the pigment. Ink which is substantially free from generation of foam and exhibits satisfactory ejection stability is therefore readily prepared, the generation of foam resulting from a reduction in a defoaming property due to the action of a dispersant. Since a large increase in ink viscosity due to the action of a dispersant can be prevented, ink can be easily treated; for example, ink can contain a large amount of pigment, so that print density can be sufficiently enhanced.

The above-mentioned hydrophilic group is preferably a hydrophilic group selected from the group consisting of -OM, -COOM, -CO-, -SO$_3$M, -SO$_2$M, -SO$_2$NH$_2$,-RSO$_2$M, -PO$_3$HM, -PO$_3$M$_2$, -SO$_2$NHCOR, -NH$_3$, and -NR$_3$.

In the hydrophilic groups described above, M represents a hydrogen atom, alkali metal, ammonium, a phenyl group optionally having a substituent, or organic ammonium; and R represents an alkyl group having 1 to 12 carbon atoms or a naphthyl group optionally having a substituent. M and R are each independently selected.

The self-dispersing pigment can be produced, for instance, by subjecting a pigment to physical or chemical treatment to bond the hydrophilic group onto a surface of the pigment (grafting). The physical treatment is, for example, a vacuum plasma treatment. Examples of the chemical treatment include a wet oxidation method in which a pigment is oxidized with an oxidant in water and a technique in which p-aminobenzoic acid is bonded onto a surface of a pigment to bond a carboxyl group through a phenyl group.

2. Polymer-dispersed Pigment

The polymer-dispersed pigments can be dispersed with a polymer dispersant. Any polymer can be used for the polymer-dispersed pigment; for example, a polymer dispersant used for dispersing a pigment has a glass transition temperature (Tg) of preferably not more than 55°C, more preferably not more than 50°C. At a Tg of not more than 55°C, ink can be sufficiently fixed. ATg herein used can be determined from a differential scanning calorimetry (DSC) curve in accordance with JIS K 7121.

The above-mentioned polymer preferably has a weight-average molecular weight of 10,000 to 200,000 determined through gel permeation chromatography (GPC). Such a weight-average molecular weight can further enhance the preservation stability of ink.

A weight-average molecular weight (Mw) herein used can be measured in polystyrene equivalent weight-average molecular weight through gel permeation chromatography with an L7100 system (commercially available from Hitachi, Ltd.).

It is preferred that a copolymer of (meth)acrylate and (meth)acrylic acid account for at least 70 mass% of such a polymer, which can further enhance the fixing property and glossiness of ink. At least any one of alkyl(meth)acrylate having 1 to 24 carbon atoms and cyclic alkyl(meth)acrylate having 3 to 24 carbon atoms is preferably produced through the polymerization with monomers which account for at least 70 mass% of the polymer. Specific examples of the monomers include, but are not limited to, methyl (meth)acrylate, ethyl (meth)acrylate, propyl (meth)acrylate, n-butyl (meth)acrylate, isobutyl (meth)acrylate, pentyl (meth)acrylate, hexyl (meth)acrylate, 2-ethylhexyl (meth)acrylate, octyl (meth)acrylate, nonyl (meth)acrylate, decyl (meth)acrylate, t-butylcyclohexyl (meth)acrylate, lauryl (meth)acrylate, isobornyl (meth)acrylate, cetyl (meth)acrylate, stearyl (meth)acrylate, isostearyl (meth)acrylate, tetramethylpiperidyl (meth)acrylate, dicyclopentanyl (meth)acrylate, dicyclopentenyl (meth)acrylate, dicyclopentenyloxy (meth)acrylate, and behenyl (meth)acrylate. Examples of other polymerizable monomers include hydroxy (meth)acrylate having a hydroxyl group, such as hydroxyethyl (meth)acrylate, hydroxypropyl (meth)acrylate, and diethylene glycol (meth)acrylate; urethane (meth)acrylate; and epoxy (meth)acrylate.

3. Pigment Coated with Polymer

Preferred polymer-dispersed pigments are pigments coated with polymers, namely, microencapsulated pigments which can provide a satisfactory fixing property, glossiness, and color reproducibility of ink.

Such a pigment coated with a polymer can be produced through phase-transfer emulsification. In particular, the above-mentioned polymer is dissolved in an organic solvent such as methanol, ethanol, isopropyl alcohol, n-butyl alcohol, acetone, methyl ethyl ketone, or dibutyl ether. A pigment is added to the solution, and then a neutralizer and water are added to the mixture. The product is kneaded and subjected to a dispersion treatment to prepare an oil-water dispersion. Then, the organic solvent is removed from the dispersion to yield a polymer-coated pigment as a water dispersant. In the kneading and dispersion treatment, for example, a ball mill, a roll mill, a bead mill, a high-pressure homogenizer, or a high-speed agitating disperser can be used.

Preferred examples of the neutralizer include ethylamine, tertiary amine such as trimethylamine, lithium hydroxide, sodium hydroxide, potassium hydroxide, and ammonium. The produced water dispersion preferably has pH ranging from 6 to 10.

The polymer which coats a pigment preferably has a weight-average molecular weight of approximately 10,000 to 150,000 determined by GPC, which enables the pigment to be stably dispersed.

Preferred polymer-coated pigments are polymer-coated color pigments. Use of such color pigments imparts satisfactory color development to printed fabric.

Resin Emulsion

The ink composition of the present embodiment at least contains a urethane resin emulsion being a resin emulsion. The ink composition containing the urethane resin emulsion can enhance the flexibility of printed fabric and the fixing property of ink, which can increase the abrasion resistance of the printed fabric to some extent. In addition, printed fabric produced with such a white ink composition has high whiteness.

In the case where the ink composition contains the resin emulsion, the resin emulsion serves to form a coating film of resin on fabric, which enables the ink composition to be sufficiently fixed onto the fabric to enhance the abrasion resistance of printed fabric. A preferred resin emulsion is thermoplastic resin. In particular, since urethane resin emulsion has high design freedom, a coating film with a predetermined physical property can be readily formed.

The urethane resin emulsion is a resin emulsion having a urethane linkage in its molecule. In addition to the urethane linkage, polyether-type urethane resins having an ether linkage in the main chain, polyester-type urethane resins having an ester linkage in the main chain, or polycarbonate-type urethane resins having a carbonate linkage in the main chain can be used as the urethane resin emulsion.

The preferred physical properties of the resin emulsion will now be described. Since the resin emulsion preferably has a film forming property within a temperature range in which ink jet recording is generally carried out (15 to 35°C), the resin emulsion has a Tg of preferably not more than -10°C, more preferably not more than -15°C. The resin emulsion having a Tg within such ranges can further enhance the fixability of ink applied onto printed fabric, leading to a further increase in the abrasion resistance of the printed fabric. The lower limit of the Tg is not specifically determined, and preferred is not less than -50°C.

The resin emulsion has an acid value preferably ranging from 10 to 100 mg KOH/g, more preferably 15 to 50 mg KOH/g. At an acid value of not more than 100 mg KOH/g, fastness of printed fabric to washing can be desirably maintained. At an acid value of not less than 10 mg KOH/g, ink has satisfactory preservation stability, and ink applied onto fabric has high color development and fixing property.

In order to obtain the acid value herein mentioned, an Automatic Potentiometric Titrator AT-610 (commercially available from Kyoto Electronics Manufacturing Co., Ltd.) is used for analysis, and then obtained value is put into the following expression to calculate an acid value.

$$\text{Acid value (mg/g)} = (EP1 - BL1) \times FA1 \times C1 \times K1 / SIZE$$

In the expression, EP1 represents titre (mL), BL1 represents a blank value (0.0 mL), FA1 represents a titrant factor (1.00), C1 represents equivalent concentration (5.611 mg/mL) (equivalent to potassium hydroxide (KOH 1 mL) of 0.1 mol/L), K1 represents a coefficient of (1), and SIZE represents a collection quantity of a specimen (g).

The resin emulsion prevents breakage or cracks of an image, namely, an ink layer of flexible fabric among a variety of recording media and therefore enhances the flexibility and abrasion resistance of printed fabric; thus, preferred elongation at breakage is in the range of 200 to 500%, and a preferred elastic modulus is in the range of 20 to 400 MPa.

The elongation at breakage herein mentioned can be measured with a film having a thickness of approximately 60 μm under conditions of a gauge length of a tension test of 20 mm and a tension speed of 100 mm/min. The elastic modulus herein mentioned can be measured through a tension test in accordance with JIS K7161:1994 with a dumbbell-shaped sample formed from a film having a thickness of approximately 60 μm so as to have a width of a parallel portion of 10 mm and a length of 40 mm.

In particular, JIS K7161:1994 corresponds to international standard ISO 527-1:1993 and is entitled "Plastics-Determination of tensile properties". JIS K7161:1994 defines a general principle to determine the tensile characteristics of plastic materials and plastic composites under predetermined conditions.

The resin emulsion has a D50 that is preferably in the range of 30 to 300 nm, more preferably 80 to 300 nm. At a D50 within such ranges, particles of the resin emulsion can be evenly dispersed in the ink composition. The lower limit of the D50 of the resin emulsion is further preferably 100 nm, which can further enhance the abrasion resistance of printed fabric.

In view of the above-mentioned physical properties of the resin emulsion, examples of commercially available products of the urethane resin emulsion include, but are not limited to, Sancure 2710 (commercially available from The Lubrizol Corporation); PERMARIN UA-150 (commercially available from Sanyo Chemical Industries, Ltd.); SUPERFLEXes 460, 470, 610, and 700 (commercially available from Dai-ichi Kogyo Seiyaku Co., Ltd.); NeoRezs R-9660, R-9637, and R-940 (commercially available from Kusumoto Chemicals, Ltd.); ADEKA BONTIGHTERs HUX-380 and 290K (commercially available from ADEKA CORPORATION); TAKELACs W-605, W-635, and WS-6021 (commercially available from Mitsui Chemicals, Inc.); and polyether (Tg: 20°C, commercially available from Taisei Fine Chemical Co., Ltd.).

These urethane resin emulsions may be used alone or in combination.

The ink composition of the present embodiment may contain any other resin emulsion than the urethane resin emulsion. Preferred are anionic resin emulsions which can effectively prevent agglomeration of resin. Examples of the anionic resin emulsions include, but are not limited to, homopolymers or copolymers of (meth)acrylic acid, (meth)acrylic ester, acrylonitrile, cyanoacrylate, acrylamide, olefin, styrene, vinyl acetate, vinyl chloride, vinyl alcohol, vinyl ether, vinylpyrrolidone, vinylpyridine, vinylcarbazole, vinylimidazole, and vinylidene chloride; fluorine resin; and natural resin. Preferred are at least any one of (meth)acrylic resins and resins of a styrene-(meth)acrylic copolymer, more preferred are at least any one of acrylic resins and resins of a styrene-acrylic copolymer, and further preferred are resins of a styrene-acrylic copolymer. The above-mentioned copolymer may be in the form of a random copolymer, a block copolymer, an alternating copolymer, or a graft copolymer.

Such resin emulsions other than the urethane resin emulsion may be produced from typical materials or produced by traditional methods, and commercially available products may be used. Examples of the commercially available products include, but are not limited to, Mowinyl 966A (acrylic resin emulsion, commercially available from The Nippon Synthetic Chemical Industry Co., Ltd.); Micro gels E-1002 and E-5002 (commercially available from NIPPON PAINT INDUSTRIAL COATING); VONCOATs 4001 and 5454 (commercially available from DIC Corporation); SAE 1014 (commercially available from ZEON CORPORATION); SAIVINOL SK-200 (commercially available from SAIDEN CHEMICAL INDUSTRY CO., LTD.); JONCRYLs 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (commercially available from BASF Japan Ltd.); and NK binder R-5HN (acrylic resin emulsion, solid content: 44%, commercially available from Shin Nakamura Chemical Co., Ltd.). Among these, preferred is Mowinyl 966A being an acrylic resin emulsion, which can sufficiently satisfy the preferred physical properties of the resin emulsion.

These resin emulsions other than the urethane resin emulsion may be used alone or in combination.

The resin emulsion content will now be described. The content of the urethane resin emulsion among the resin emulsions is in the range of 3.5 to 14 mass% on solids basis relative to the total mass of the ink composition (100 mass%). The urethane resin emulsion content of not less than 3.5 mass% can enhance the flexibility of printed fabric, leading to an increase in the abrasion resistance of the printed fabric. The urethane resin emulsion content of not more than 14 mass% enables the ink composition to exhibit satisfactory long-term stability; in particular, the viscosity of the ink composition can be decreased.

The urethane resin emulsion content in the white ink composition is preferably in the range of 7 to 14 mass%, more preferably 8 to 12 mass% relative to the total mass of the white ink composition (100 mass%), which can increase the thickness and strength of a coating film and easily enhance the whiteness of printed fabric.

The urethane resin emulsion content in the non-white ink composition is preferably in the range of 3.5 to 8.0 mass% relative to the total mass of the non-white ink composition (100 mass%). At the urethane resin emulsion content within such a range, printed fabric can exhibit further satisfactory flexibility, and the abrasion resistance of the printed fabric can be further enhanced.

Emulsion-type Silicone Compound

The ink composition of the present embodiment contains an emulsion-type silicone compound. The silicone compound herein refers to a polymer containing a siloxane unit as a repeating unit, more particularly, a polymer in which an inorganic siloxane bond and a substituent such as a methyl group are contained in the same molecule. In other words, the emulsion-type silicone compound is a water-dispersible resin composed of silicone. Since the ink composition of the present embodiment contains both the above-mentioned urethane resin emulsion and the emulsion-type silicone compound, printed fabric can have further satisfactory flexibility and abrasion resistance, leading to production of printed fabric having good quality and texture.

The emulsion-type silicone compound may have a linear, branched, or cross-linked molecular structure. The emulsion-type silicone compound may be modified; in this case, the silicone compound is modified with at least one substituent.

Examples of the substituents include, but are not limited to, an alkyl group such as a methyl group or an ethyl group; an aromatic ring group such as a phenyl group, a methylphenyl group, or a diphenyl group; a polyether group; a carboxyl group; an epoxy group, and an amino group.

Specific examples of the emulsion-type silicone compound include, but are not limited to, a dimethyl silicone emulsion, a methylphenyl silicone emulsion, an amino-modified silicone emulsion, an epoxy-modified silicone emulsion, a polyether-modified silicone emulsion, an alkyl-modified silicone emulsion, a higher fatty acid-modified silicone emulsion, a methyl hydrogen silicone emulsion, a fluorine-modified silicone emulsion, a carboxy-modified silicone emulsion, a polyglycerol-modified silicone emulsion, a carbinol-modified silicone emulsion, an epoxy polyether-modified silicone emulsion, an alkyl polyether-modified silicone emulsion, and a reactive silicone emulsion.

Among these, preferred is at least one emulsion-type silicone compound selected from a dimethyl silicone emulsion, an epoxy-modified silicone emulsion, an amino-modified silicone emulsion, and a reactive silicone emulsion, and these emulsion-type silicone compounds exhibit high compatibility in the ink composition and enable printed fabric to have good flexibility and texture. The detail of such a silicone emulsion will now be described, and the term "emulsion" may be omitted where appropriate.

Dimethyl silicone emulsion preferably decreases a coefficient of dynamic friction with fabric. Dimethyl silicone preferably has a large degree of polymerization or kinematic viscosity. In particular, dimethyl silicone preferably has a kinematic viscosity of not less than 1,000 $mm^2/s$, more preferably not less than 10,000 $mm^2/s$. In this case, kinematic viscosity is measured at 25°C. An increase in the degree of polymerization causes an increase in viscosity. Hence, dimethyl silicone having high viscosity is preferably employed to decrease a coefficient of dynamic friction.

Examples of such dimethyl silicone include, but are not limited to, KF96A-2cs, 5cs, 6cs, 10cs, 20cs, 30cs, 50cs, 100cs, 200cs, 300cs, 350cs, and 500cs; KF-96-1000cs and 3000cs; KF-96A-5000cs; KF-96H-6000cs, 10000cs, 12500cs, 30000cs, 50000cs, 60000cs, 100000cs, 300000cs, 500000cs, and 1000000cs; and Polons MF-7, MF-17, and MF-32 (commercially available from Shin-Etsu Chemical Co., Ltd.).

The above-mentioned epoxy-modified silicone emulsion is desirably used to produce a composition of a liquid softening agent which can impart flexibility to fabric. Also in epoxy-modified silicone, an increase in the degree of polymerization or viscosity leads to a decrease in a coefficient of dynamic friction. In particular, epoxy-modified silicone preferably has a kinematic viscosity of not less than 5,000 $mm^2/s$.

Examples of such epoxy-modified silicone include, but are not limited to, Polons MF-11C, MF-18T, and MF-24 (commercially available from Shin-Etsu Chemical Co., Ltd.).

The above-mentioned amino-modified silicone preferably imparts satisfactory flexibility to fabric and enables printed fabric to have excellent texture. Examples of the amino-modified silicone include, but are not limited to, Polon MF-14 (commercially available from Shin-Etsu Chemical Co., Ltd.).

The above-mentioned reactive silicone emulsion preferably enhances the strength of a coating film and enables printed fabric to have satisfactory abrasion resistance and fastness to washing. Specific examples of the reactive silicone emulsion include, but are not limited to, addition reaction-type silicone emulsions, peroxide-curable silicone emulsions, and photo-curable silicone emulsions. Examples of commercially available products thereof include TSR1500, TSR1510, TSR1511, TSR1515, TSR1520, YR3286, YR3340, PSA6574, TPR6500, TPR6501, TPR6600, TPR6702, TPR6604, TPR6700, TPR6701, TPR6705, TPR6707, TPR6708, TPR6710, TPR6712, TPR6721, TPR6722, UV9300, UV9315, UV9425, UV9430, XS56-A2775, XS56-A2982, XS56-A3075, XS56-A3969, XS56-A5730, XS56-A8012, XS56-B1794, SL6100, SM3000, SM3030, SM3200, and YSR3022 (commercially available from Momentive Performance Materials Inc.); and KM-2002L-1 (commercially available from Shin-Etsu Chemical Co., Ltd.).

The emulsion-type silicone compound content is in the range of 0.4 to 3.0 mass% relative to the total mass of the ink composition (100 mass%). The emulsion-type silicone compound content of not less than 0.4 mass% enables satisfactory abrasion resistance, high preservation stability of ink, and satisfactory flexibility of printed fabric to be provided. The emulsion-type silicone compound content of not more than 3.0 mass% can effectively contribute to a decrease in the viscosity of ink and impart satisfactory preservation stability to ink. The emulsion-type silicone compound content is preferably in the range of 0.5 to 2.8 mass%, more preferably 0.7 to 2.7 mass% relative to the total mass of the ink composition (100 mass%) in terms of a good balance between an enhancement of abrasion resistance and a decrease in the viscosity of ink.

Cyclic Amide Compound

It is preferred that the ink composition of the present embodiment further contain a cyclic amide compound, which can further enhance the preservation stability of the ink composition, especially preservation stability under high temperature. Cyclic amide compounds can also contribute to humidity retention, which can prevent agglomeration and solidification of the urethane resin emulsion, other resins (polymer), and pigment due to evaporation of their water contents during preservation of ink. Hence, the occurrence of clogging in the vicinity of the nozzle of a head can be prevented during ink jet textile printing, leading to satisfactory ejection stability of the ink composition.

Specific examples of the cyclic amide compound include, but are not limited to, 2-pyrrolidone, N-methyl-2-pyrrolidone, and N-ethyl-2-pyrrolidone. Among these, preferred is 2-pyrrolidone which can further enhance the preservation stability of the ink composition, especially preservation stability under high temperature.

The above-mentioned cyclic amide compounds may be used alone or in combination.

The cyclic amide compound content is preferably not less than 1 mass%, more preferably 1 to 5 mass% relative to the total mass of the ink composition (100 mass%). The cyclic amide compound content within these ranges can further enhance the long-term preservation stability of ink.

Water

The ink composition of the present embodiment is an aqueous ink composition and contains water as an aqueous solvent. Examples of the aqueous solvent include water and water-soluble organic solvents. Any type of water can be used, such as pure water or ultrapure water (e.g., ion-exchanged water, ultra-filtered water, reverse osmosis water, and distilled water). The water content is in the range of 20 to 80 mass% relative to the total mass of the ink composition (100 mass%). The water content is not limited to the amount of separately added water and includes the amount of water contained in the other additives.

In order to avoid repeated explanation, description of the following additives (components) is based on assumption that the additives are free from any cyclic amide compound.

Penetrant

It is preferred that the ink composition of the present embodiment further contain a penetrant, which can enhance penetration of the aqueous solvent into fabric. Quick penetration of the aqueous solvent into fabric enables production of printed fabric with less blurred images.

Preferred examples of the penetrant include alkyl ethers of polyhydric alcohols (glycol ethers) and 1,2-alkyldiols. Examples of such glycol ethers include, but are not limited to, ethylene glycol monomethyl ether, ethylene glycol monoethyl ether, ethylene glycol monopropyl ether, ethylene glycol monobutyl ether, ethylene glycol monomethyl ether acetate, diethylene glycol monomethyl ether, diethylene glycol monoethyl ether, diethylene glycol monopropyl ether, diethylene glycol monobutyl ether, diethylene glycol mono-t-butyl ether, triethylene glycol monobutyl ether, 1-methyl-1-methoxybutanol, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, and dipropylene glycol monobutyl ether. Examples of 1,2-alkyldiols include, but are not limited to, 1,2-pentanediol and 1,2-hexanediol. In addition, diols of normal hydrocarbon can be used, such as 1,3-propanediol, 1,4-butanediol, 1,5-pentanediol, 1,6-hexanediol, 1,7-heptanediol, and 1,8-octanediol.

The above-mentioned penetrants may be used alone or in combination.

The penetrant content is preferably in the range of 0.1 to 20 mass%, more preferably 0.5 to 10 mass% relative to the total mass of the ink composition (100 mass%). The penetrant content of not less than 0.1 mass% can enhance the degree of penetration of the ink composition into fabric. The penetrant content of not more than 20 mass% can prevent generation of blurred images and prevent an increase in the viscosity of the ink composition.

Moisturizing Agent

The ink composition of the present embodiment may contain a moisturizing agent (humectant). Any moisturizing agent which has been generally contained in ink jet ink can be used. Preferred are high-boiling moisturizing agents having a high boiling point of preferably not less than 180°C, more preferably not less than 200°C. The moisturizing agent having a boiling point within these ranges enables the ink composition to have a satisfactory water holding property and wettability.

Specific examples of the moisturizing agents having a high boiling point include, but are not limited to, ethylene glycol, propylene glycol, diethylene glycol, triethylene glycol, pentamethylene glycol, trimethylene glycol, 2-butene-1,4-diol, 2-ethyl-1,3-hexanediol, 2-methyl-2,4-pentanediol, tripropylene glycol, polyethylene glycol having a number-average molecular weight of not more than 2000, 1,3-propylene glycol, isopropylene glycol, isobutylene glycol, glycerine, mesoerythritol, and pentaerythritol.

The above-mentioned moisturizing agents may be used alone or in combination. The ink composition containing the high-boiling moisturizing agent enables production of the ink composition which can maintain the fluidity and redispersibility of a pigment ink for a long period even in the case where the ink composition is preserved in a state in which the pigment ink is exposed to air at room temperature, namely, an open-air condition. Furthermore, in ink jet textile printing with an ink jet textile printing apparatus, such an ink composition prevents the occurrence of nozzle clogging during the printing process or at restart of interrupted printing process, which can enhance the ejection stability of the ink composition. The moisturizing agent content is not specifically limited and appropriately determined as needed.

In the case where the ink composition contains a cyclic amide compound, the cyclic amide compound contributes to humidity retention as described above, and the cyclic amide compound can be therefore used as the moisturizing agent.

Surfactant

The ink composition of the present embodiment may contain a surfactant. Preferred is a surfactant composed of at least any one of acetylene glycol, acetylene alcohol, and polysiloxane. The ink composition containing such a surfactant exhibits a further satisfactory drying property after being applied to fabric and enables high-speed printing.

Especially preferred are surfactants composed of polysiloxane in terms of sufficient solubility in the ink composition.

Preferred examples of the surfactants composed of acetylene glycol or acetylene alcohol include, but are not limited to, one or more materials selected from 2,4,7,9-tetramethyl-5-decyne-4,7-diol, alkylene oxide adducts of 2,4,7,9-tetramethyl-5-decyne-4,7-diol, 2,4-dimethyl-5-decyne-4-ol, and alkylene oxide adducts of 2,4-dimethyl-5-decyne-4-ol. Commercially available products may be used as such surfactants, such as Olfine 104 series and Olfine E series including E1010 (commercially available from Nissin Chemical Industry Co., Ltd.) and Surfynols 465 and 61 (commercially available from Nissin Chemical Industry Co., Ltd.).

Examples of commercially available surfactants composed of polysiloxane include BYK-347 and BYK-348 (commercially available from BYK Japan KK).

The surfactant content is preferably in the range of 0.1 to 3 mass% relative to the total mass of the ink composition (100 mass%).

Other Components

In order to desirably maintain the preservation stability of the ink composition of the present embodiment, eject the ink composition from a head with good stability, overcome nozzle clogging, or prevent degradation of ink, the ink composition may appropriately contain a variety of additives such as a solubilizing agent, a penetration controlling agent, a viscosity adjuster, a pH adjuster, an antioxidant, a preservative, a fungicide, a corrosion inhibitor, and a chelating agent for capturing metal ions having an effect on the dispersion.

The present embodiment can provide the ink composition for ink jet textile printing, the ink composition exhibiting satisfactory long-term stability which is indicated by a decrease in the viscosity of ink and the preservation stability of the ink and imparting satisfactory abrasion resistance, flexibility, quality, and texture to printed fabric. The present embodiment can also provide the white ink composition for ink jet textile printing, the white ink composition enabling printed fabric to have high whiteness, in other words, enabling production of highly white printed fabric.

Image Forming Method

An embodiment of the present invention relates to an image forming method. The image forming method of the present embodiment involves formation of an image on fabric by ink jet textile printing with the ink composition for ink jet textile printing according to the above embodiment.

In particular, the image forming method preferably involves an application process in which the ink composition is applied to fabric and a heating process in which the fabric subjected to the application of the ink composition is heated. It is more preferred that the image forming method further involve a pretreatment process in which a pretreatment agent is applied to fabric before the application process.

Examples of fabric used in the image forming method include, but are not limited to, natural fibers and synthetic fibers, such as silk, cotton, wool, nylon, polyester, and rayon. Among these, preferred is cotton which allows the ink composition to be fixed under high temperature.

In the ink jet textile printing, the ink composition is supplied to an ink jet textile printing apparatus. Examples of the ink jet textile printing apparatus include, but are not limited to, drop-on-demand ink jet textile printing apparatuses. The drop-on-demand ink jet textile printing apparatuses include an ink jet textile printing apparatus utilizing a piezoelectric device provided to a head and an ink jet textile printing apparatus utilizing thermal energy generated by a heat element provided to a head, such as heater, and any type of ink jet textile printing apparatus can be used.

Pretreatment Process

In order to prevent the occurrence of ink bleed on fabric, it is preferred that the fabric be subjected to pretreatment with a pretreatment agent before formation of an image by application of the ink composition onto the fabric, in other words, a pretreatment process be carried out. In the pretreatment process, a pretreatment agent containing a flocculant is applied to fabric; in particular, the pretreatment agent is applied to fabric, and then the fabric is dried. Examples of pretreatment includes, but are not limited to, immersing fabric into the pretreatment agent and applying or spraying the pretreatment agent onto fabric.

The flocculant can agglomerate pigments contained in the ink composition and precipitate water-dispersible resin (resin emulsion) to form a coating film of ink on fabric. Preferred flocculants are one or more materials selected from organic acids and polyvalent metal compounds. Preferred examples of the organic acids include, but are not limited to, acetic acid, propionic acid, and lactic acid.

Examples of the polyvalent metallic compounds include, but are not limited to, titanium compounds, chromium compounds, copper compounds, cobalt compounds, strontium compounds, barium compounds, iron compounds, aluminum compounds, calcium compounds, magnesium compounds, and salts thereof (polyvalent metal salts). Among these polyvalent metallic compounds, in view of effective agglomeration of pigments, preferred are one or more materials selected from the group consisting of aluminum compounds, calcium compounds, and magnesium compounds, more preferred are at least any one of calcium compounds and magnesium compounds, and further preferred are calcium compounds. Specific examples of the above-mentioned polyvalent metallic compounds include inorganic pigments such as calcium carbonates (e.g., heavy calcium carbonate and precipitated calcium carbonate), chalk, kaolin, calcined clay, talc, calcium nitrate, calcium sulfate, barium sulfate, titanium dioxide, zinc oxide, zinc sulfide, zinc carbonate, aluminum silicate, calcium silicate, magnesium silicate, synthetic silica, aluminum hydroxide, alumina, sericite, white carbon, saponite, calcium montmorillonite, sodium montmorillonite, and bentonite; and organic pigments such as acrylic plastic pigments, polyethylene, and polyureas.

In the case where the pretreatment agent contains a calcium compound, the calcium ion concentration of the pretreatment agent is preferably in the range of 1 to 5 mass% relative to the total mass of the pretreatment agent (100 mass%). At the calcium ion concentration within such a range, printed fabric to which the white ink composition has been applied has sufficient whiteness, and a pretreatment agent applied thereto is invisible.

The pretreatment agent may further contain, in addition to the flocculant, for example, the above-mentioned resin emulsion, moisturizing agent, penetrant, and water; and a sizing agent.

Among these, the resin emulsion content is preferably in the range of 1 to 5 mass% on solids basis relative to the total mass of the pretreatment agent (100 mass%). At the resin emulsion content within such a range, printed fabric to which the white ink composition has been applied can exhibit even whiteness with a reduction in uneven color, and a pretreatment agent applied thereto is invisible.

Examples of the sizing agent include, but are not limited to, starches derived from, for instance, maize and wheat; cellulosic materials such as carboxymethyl cellulose and hydroxymethyl cellulose; polysaccharide such as sodium alginate, gum arabic, locust bean gum, trant gum, guar gum, and tamarindus indica seed; proteins such as gelatine and casein; water-soluble naturally occurring polymers such as tannin and lignin; and synthetic water-soluble polymers such as polymers comprising polyvinyl alcohol, polymers comprising polyethylene oxide, polymers formed from acrylic acid monomers, and polymers formed from maleic anhydride monomers. The sizing agent content is preferably not more than 20 mass% relative to the total mass of the pretreatment agent (100 mass%). At the sizing agent content within such a range, the viscosity of ink can be decreased to an extent which enables application of the ink with a roller and a spray to be desirably carried out.

The pretreatment agent optionally contains various additives such as a pH adjuster, a reduction inhibitor, a sequestering agent, and a defoaming agent.

Fabric to which the pretreatment agent has been applied is dried by a heat treatment within 2 min at preferably 110 to 200°C, more preferably 120 to 180°C. Heating at 110°C or higher enables the pretreatment agent to be desirably fixed. Heating at 200°C or lower can effectively prevent decreases in the quality of fabric and the quality of components of the pretreatment agent, such as a polymer.

Application Process

In the application process, the ink composition is ejected and applied onto a surface of fabric (including fabric subjected to the pretreatment) to form an image.
Conditions in the ejection may be appropriately determined depending on the physical properties of an ink composition to be ejected.

Heating Process

In the heating process, fabric to which the ink composition has been applied is heated. The heating process enables resin (polymer) contained in the ink composition, such as the urethane resin emulsion, to be thermally bonded onto a surface of the fabric and enables water content to be evaporated. The abrasion resistance of printed fabric can be therefore further enhanced.
Examples of the heating process include, but are not limited to, heat press, atmospheric steaming, high-pressure steaming, and THERMOFIX. Any heat source can be used for the heating process; for example, an infrared ray lamp is employed. The heating process can be carried out at any temperature which enables resin (polymer) contained in the ink composition, such as the urethane resin emulsion, to be thermally bonded and enables water content to be evaporated, and a preferred temperature is in the range of approximately 150 to 200°C.
After the heating process, printed fabric may be washed with water and then dried. In this case, a soaping process may be optionally carried out, in other words, non-fixed pigments may be washed away with a warm soap solution.
Through these processes, a recorded matter such as printed fabric can be produced, in which an image is formed on a recording medium, such as fabric, with the ink composition of the above-mentioned embodiment. Such a recorded matter is free from cracking, an uneven surface profile, and a stain and thus exhibits excellent color development. Furthermore, the recorded matter exhibits satisfactory fixability (adhesion) of the ink composition, leading to an enhancement in abrasion resistance.

Examples

Embodiments of the invention will now be described further in detail with reference to Examples but should not be limited thereto.

Preparation of Pretreatment Agent

A pretreatment agent P1 for pretreatment of fabric before formation of an image was prepared as follows. Calcium nitrate tetrahydrate being a polyvalent metallic compound (20 mass%, calcium ion concentration: 17.0 mass%), an acrylic resin emulsion (10 mass%, NK binder R-5HN commercially available from Shin Nakamura Chemical Co., Ltd., solid content: 44%), BYK-348 (0.1 mass%, surfactant composed of polysiloxane, commercially available from BYK Japan KK), and ion-exchanged water (balance) were mixed in the total mass of 100 mass% and uniformly stirred to prepare the pretreatment agent P1. The pretreatment agent P1 had a calcium ion concentration of 3.4 mass% and a solid content concentration of anionic resin of 4.4 mass%.

Material Used for Preparation of Ink Composition

The following materials were used in Examples and Comparative Examples.

1. Pigment

1-1. White Pigment

Slurry of titanium dioxide (NanoTek (registered trademark) Slurry commercially available from C. I. Kasei Company, Limited, solid content concentration of titanium dioxide of 20%, average particle size of 250 nm) was used.

1-2. Cyan Pigment

A cyan pigment dispersion was prepared in the following manner. A reaction vessel having an agitator, a thermometer, a condenser, and a dropping funnel was thoroughly purged with nitrogen gas, and then cyclohexyl acrylate (20 parts by mass), 2-ethyl hexyl acrylate (5 parts by mass), butylacrylate (15 parts by mass), lauryl acrylate (10 parts by mass), acrylic acid (2 parts by mass), and t-dodecyl mercaptan (0.3 parts by mass) were mixed. The mixture was heated at 70°C, and separately prepared cyclohexyl acrylate (150 parts by mass), acrylic acid (15 parts by mass), butylacrylate (50 parts by mass), t-dodecyl mercaptan (1 parts by mass), methyl ethyl ketone (20 parts by mass), and azobisisovaleronitrile (1 parts by mass) were put into a dropping funnel and transferred dropwise into a reaction vessel for 4 hr for a polymerization reaction of a dispersion polymer. Then, methyl ethyl ketone was put into the reaction vessel to prepare a solution of dispersion polymer having a concentration of 40 mass%. The dispersion polymer had a molecular weight dispersity (Mw/Mn) of 3.1.

A weight-average molecular weight (Mw) was herein measured in the manner described above. A number-average molecular weight (Mn) was herein measured by gel permeation chromatography (GPC) in polystyrene equivalent number-average molecular weight as in the measurement of a weight-average molecular weight (Mw).

The solution of dispersion polymer (40 parts by mass), Pigment Blue 15:3 (30 parts by mass, copper phthalocyanine pigment, commercially available from Clariant), aqueous sodium hydroxide of 0.1 mol/L (100 parts by mass), and methyl ethyl ketone (30 parts by mass) were mixed and then stirred with a homogenizer for 30 min. Then, ion-exchanged water (300 parts by mass) was added to the mixture and further stirred for 1 hr. The entire methyl ethyl ketone content and part of water content were removed by distillation with a rotary evaporator, and the product was neutralized with sodium hydroxide of 0.1 mol/L in pH 9 and then filtered through a membrane filter of 0.3 $\mu$m. Through these processes, a cyan pigment dispersion having solid content concentration (dispersion polymer and Pigment Blue 15:3) of 15 mass% was prepared. The dispersion polymer contained in the cyan pigment dispersion had a molecular weight dispersity (Mw/Mn) of 3.0.

2. Urethane Resin Emulsion

Sancure 2710 (commercially available from The Lubrizol Corporation, anionic material, solid content concentration: 40 mass%, hereinafter referred to as "urethane resin A"); and
PERMARIN UA-150 (commercially available from Sanyo Chemical Industries, Ltd., anionic material, solid content concentration: 30 mass%, hereinafter referred to as "urethane resin B")

3. Emulsion-type Silicone Compound

Amino-modified silicone emulsion (Polon MF-14 commercially available from Shin-Etsu Chemical Co., Ltd., solid content concentration: 15 mass%, hereinafter referred to as "silicone A");
Reactive silicone emulsion (KM-2002L-1 commercially available from Shin-Etsu Chemical Co., Ltd., solid content concentration: 44 mass%, hereinafter referred to as "silicone B");
Epoxy-modified silicone emulsion (Polon MF-18T commercially available from Shin-Etsu Chemical Co., Ltd., solid content concentration: 38 mass%, hereinafter referred to as "silicone C"); and
Dimethyl silicone emulsion (Polon MF-32 commercially available from Shin-Etsu Chemical Co., Ltd., solid content concentration: 31 mass%, hereinafter referred to as "silicone D")

4. Cyclic Amide Compound

2-pyrrolidone (commercially available from KANTO CHEMICAL CO., INC.)

5. Moisturizing Agent

Glycerine (commercially available from SAKAMOTO YAKUHIN KOGYO CO., LTD.); and
Triethylene glycol (commercially available from KANTO CHEMICAL CO., INC., hereinafter referred to as "TEG")

6. Glycol Ether

Triethylene glycol monobutyl ether (commercially available from KANTO CHEMICAL CO., INC., hereinafter referred to as "TEGmBE")

7. Surfactant

BYK-348 (commercially available from BYK Japan KK as described above) Preparation of Ink Composition
Ingredients shown in Tables 1 to 3 were mixed in amounts shown in Tables 1 to 3 (unit: mass%) and then thoroughly stirred. The solutions were filtered through a metallic filter having a pore size of 5 $\mu$m and then degased with a vacuum pump to yield ink compositions of Examples and Comparative Examples.

In Tables 1 to 3, the term "cyan pigment concentration" refers to "the solid content concentration of a cyan pigment in ink (mass%)", the term "titanium dioxide concentration" refers to "the solid content concentration of titanium dioxide in ink (mass%)", the term "urethane resin concentration" refers to "the solid content concentration of urethane resin in ink (mass%)", the term "silicone concentration" refers to "the solid content concentration of a silicone compound in ink (mass%)".

Table 1: Examples 1 to 6

| Materials/Examples (ink No.) | 1 | 2 | 3 | 4 | 5 | 6 |
|---|---|---|---|---|---|---|
| Slurry of titanium dioxide (solid content concentration: 20 mass%) | 50 | 50 | 50 | 50 | 50 | 50 |
| Cyan pigment dispersion (solid content concentration: 15 mass%) | - | - | - | - | - | - |
| Urethane resin A (solid content concentration: 40 mass%) | 28 | - | 28 | 28 | 33 | 16 |
| Urethane resin B (solid content concentration: 30 mass%) | - | 30 | - | - | - | - |
| Silicone A (solid content concentration: 15 mass%) | 6 | 6 | - | 6 | - | - |
| Silicone B (solid content concentration: 44 mass%) | - | - | 4 | - | 4 | 4 |
| Silicone C (solid content concentration: 38 mass%) | - | - | - | - | - | - |
| Silicone D (solid content concentration: 31 mass%) | - | - | - | - | - | - |
| Glycerine | 8 | 8 | 8 | 8 | 4 | 8 |
| TEG | 1 | 1 | 1 | 1 | 1 | 1 |
| 2-pyrrolidone | 1 | 1 | 1 | - | - | - |
| TEGmBE | 1 | 1 | 1 | 1 | 1 | 1 |
| BYK-348 | 0.3 | 0.3 | 0.3 | 0.3 | 0.3 | 0.3 |
| Ion-exchanged water | Balance | Balance | Balance | Balance | Balance | Balance |
| Titanium dioxide concentration | 10 | 10 | 10 | 10 | 10 | 10 |
| Urethane resin concentration | 11.2 | 9 | 11.2 | 11.2 | 13.2 | 6.4 |
| Silicone concentration | 0.9 | 0.9 | 1.76 | 0.9 | 1.76 | 1.76 |

Table 2: Examples 7 to 12

| Materials/Examples (ink No.) | 7 | 8 | 9 | 10 | 11 | 12 |
|---|---|---|---|---|---|---|
| Slurry of titanium dioxide (solid content concentration: 20 mass%) | 50 | 50 | 50 | 50 | - | - |
| Cyan pigment dispersion (solid content concentration: 15 mass%) | - | - | - | - | 27 | 27 |
| Urethane resin A (solid content concentration: 40 mass%) | 28 | 28 | 28 | 28 | 12 | 9 |
| Urethane resin B (solid content concentration: 30 mass%) | - | - | - | - | - | - |

(continued)

| Materials/Examples (ink No.) | 7 | 8 | 9 | 10 | 11 | 12 |
|---|---|---|---|---|---|---|
| Silicone A (solid content concentration: 15 mass%) | - | - | - | - | 5 | 5 |
| Silicone B (solid content concentration: 44 mass%) | 6.5 | 1 | - | - | - | - |
| Silicone C (solid content concentration: 38 mass%) | - | - | 5 | - | - | - |
| Silicone D (solid content concentration: 31 mass%) | - | - | - | 5 | - | - |
| Glycerine | 8 | 8 | 8 | 8 | 8 | 8 |
| TEG | 1 | 1 | 1 | 1 | 1 | 1 |
| 2-pyrrolidone | 1 | 1 | 1 | 1 | 1 | 1 |
| TEGmBE | 1 | 1 | 1 | 1 | 1 | 1 |
| BYK-348 | 0.3 | 0.3 | 0.3 | 0.3 | 0.3 | 0.3 |
| Ion-exchanged water | Balance | Balance | Balance | Balance | Balance | Balance |
| Titanium dioxide concentration | 10 | 10 | 10 | 10 | 0 | 0 |
| Cyan pigment concentration | 0 | 0 | 0 | 0 | 4.05 | 4.05 |
| Urethane resin concentration | 11.2 | 11.2 | 11.2 | 11.2 | 4.8 | 3.6 |
| Silicone concentration | 2.86 | 0.44 | 1.9 | 1.55 | 0.75 | 0.75 |

Table 3: Comparative Examples 1 to 5

| Materials/Comparative Examples (ink No.) | 1 | 2 | 3 | 4 | 5 |
|---|---|---|---|---|---|
| Slurry of titanium dioxide (solid content concentration: 20 mass%) | 50 | 50 | 50 | 50 | - |
| Cyan pigment dispersion (solid content concentration: 15 mass%) | - | - | - | - | 27 |
| Urethane resin A (solid content concentration: 40 mass%) | 36 | 6 | 20 | 20 | 12 |
| Urethane resin B (solid content concentration: 30 mass%) | - | - | - | - | - |
| Silicone A (solid content concentration: 15 mass%) | - | - | - | - | - |
| Silicone B (solid content concentration: 44 mass%) | 4 | 4 | 8 | 0.8 | - |
| Silicone C (solid content concentration: 38 mass%) | - | - | - | - | - |
| Silicone D (solid content concentration: 31 mass%) | - | - | - | - | - |
| Glycerine | 4 | 8 | 8 | 8 | 8 |
| TEG | 1 | 1 | 1 | 1 | 1 |
| 2-pyrrolidone | - | - | - | - | - |
| TEGmBE | 1 | 1 | 1 | 1 | 1 |
| BYK-348 | 0.3 | 0.3 | 0.3 | 0.3 | 0.3 |
| Ion-exchanged water | Balance | Balance | Balance | Balance | Balance |
| Titanium dioxide concentration | 10 | 10 | 10 | 10 | 0 |

(continued)

| Materials/Comparative Examples (ink No.) | 1 | 2 | 3 | 4 | 5 |
|---|---|---|---|---|---|
| Cyan pigment concentration | 0 | 0 | 0 | 0 | 4.05 |
| Urethane resin concentration | 14.4 | 2.4 | 8 | 8 | 4.8 |
| Silicone concentration | 1.76 | 1.76 | 3.52 | 0.352 | 0 |

Production of Printed Fabric

Pretreatment Process

A T-shirt of 100% cotton ("Heavy Weight" commercially available from Hanesbrands Inc., black color) was used as fabric, and the pretreatment agent P1 prepared as described above was evenly applied thereto with a roller in an amount ranging from 18 to 20 g per an A4 paper size. After the application, the product was heated at 160°C for 1 min with a heat press machine.

Application Process

Each ink prepared as described above was applied to the fabric after the pretreatment process with an ink jet printer ("PX-G930" commercially available from SEIKO EPSON CORPORATION). Each white ink was applied in an amount of 180 mg/inch$^2$ to form a four-layered image with a solid pattern at a recording resolution of 1440dpi×1440dpi. Each cyan ink was applied to form a single-layered image with a solid pattern at a recording resolution of 1440dpix720dpi. The white inks and the cyan inks were used in ink jet textile printing in these manners, respectively.
The term "image with a solid pattern" herein refers to an image in which a dot is formed in every pixel being the minimum recording unit area defined by a recording resolution.

Heating Process

The fabric to which the ink had been applied was heated at 160°C for 1 min with a heat press machine to fix the ink to the fabric. Through these processes, printed fabric on which an image had been formed on fabric (ink had been applied thereto) was produced.

Evaluation of Ink and Printed Fabric

Each ink prepared as described above was subjected to evaluations of viscosity and preservation stability. Each printed fabric produced as described above was subjected to an evaluation of abrasion resistance. In the printed fabric produced as described above, printed fabric produced with each white ink composition was subjected to evaluations of whiteness and flexibility.

1. Viscosity of Ink

The viscosity of each ink at 25°C was measured with a DVM-E rotational viscometer (manufactured by TOKYO KEIKI INC.). Results of the measurement were evaluated on the basis of the following criteria. Results of the evaluation are shown in Tables 4 and 5.

A: Less than 5 mPa·s;
B: Not less than 5 mPa·s and less than 7 Pa·s; and
C: Not less than 7 mPa·s.

2. Preservation Stability of Ink

The inks prepared as described above were put into 50 cc glass bottles, and each glass bottle was airtightly sealed. Each glass bottle was put into a thermostatic oven at 60°C and left to stand for 7 days. Each glass bottle was retrieved after seven days and thoroughly cooled to room temperature. Then, the viscosity of the ink in each glass bottle was measured in the same manner as described in "1. Viscosity of Ink". A rate of increase in the viscosity of the ink left to stand for seven days to the initial viscosity obtained as described in "1. Viscosity of Ink" was calculated. Results of the calculation were evaluated on the basis of the following criteria. Results of the evaluation are shown in Tables 4 and 5.

A: Less than +5%;
B: Not less than +5% and less than +15%; and
C: Not less than +15%.

3. Whiteness of Printed Fabric

The printed fabric produced with each white ink composition was subjected to evaluation of whiteness. The printed fabric was subjected to analysis with a commercially available colorimeter ("Gretag Macbeth Spectrolino" manufactured by X-Rite, Inc.) to determine an L* value in accordance with CIE/L*a*b* color space.
Results of the analysis were evaluated on the basis of the following criteria. Results of the evaluation are shown in Tables 4 and 5.

A: L* value of not less than 92;
B: L* value of not less than 90 and less than 92; and
C: L* value less than 90.

4. Abrasion Resistance of Printed Fabric

The abrasion resistance of the printed fabric was evaluated with a color fastness rubbing tester (commercially available from TESTER SANGYO CO., LTD.) in accordance with JIS K5701 (ISO 11628) (standard of a method for testing an ink, paint vehicle, and printed matter in lithography).
Shirting was put onto a surface of an image formed on the printed fabric, and the surface of the image was rubbed in this state with application of a load of 500 g. Then, pealing and damage on the rubbed surface of the image were visually observed.
Results of the observation were evaluated on the basis of the following criteria, and results of the evaluation are shown in Tables 4 and 5.

A: No stain on shirting, and no peeling and damage on a surface of an image;
B: Slight stains on shirting, and no peeling and damage on a surface of an image;
C: Some stains on shirting, and a surface of an image was peeled and damaged in a linear shape;
D: Remarkable stains on shirting, and a surface of an image was peeled and damaged in a planar shape.

5. Flexibility of Printed Fabric

The printed fabric produced with each white ink composition was subjected to evaluation of flexibility. The printed fabric, in other words, a T-shirt on which an image had been formed was cut into strips including a printed area and having a width of 2 cm and a length of 5 cm. The printed surface was stretched 1.7 times relative to the initial length, and then a coating film of ink (image) on the printed surface was visually observed for evaluation.
Results of the observation were evaluated on the basis of the following criteria. Results of the evaluation are shown in Tables 4 and 5.

A: No crack in a surface of a coating film;
B: At most five cracks in a surface of a coating film;
C: Six to ten cracks in a surface of a coating film; and
D: At least 11 cracks in a surface of a coating film.

Table 4

| Evaluation items/Examples | 1 | 2 | 3 | 4 | 5 | 6 | 7 | 8 | 9 |
|---|---|---|---|---|---|---|---|---|---|
| Viscosity | A | A | A | A | B | A | B | A | A |
| Preservation stability | A | A | A | B | B | A | A | A | A |
| Whiteness | A | A | A | A | A | B | A | A | A |
| Abrasion resistance | B | B | B | B | B | C | A | B | B |

(continued)

| Evaluation items/Examples | 1 | 2 | 3 | 4 | 5 | 6 | 7 | 8 | 9 |
|---|---|---|---|---|---|---|---|---|---|
| Flexibility | A | A | A | A | A | B | A | B | A |

Table 5

| Evaluation items/Examples | Examples | | | Comparative Examples | | | | |
|---|---|---|---|---|---|---|---|---|
| | 10 | 11 | 12 | 1 | 2 | 3 | 4 | 5 |
| Viscosity | A | A | A | C | A | C | A | A |
| Preservation stability | A | A | A | B | B | B | B | A |
| Whiteness | A | - | - | A | C | A | A | - |
| Abrasion resistance | A | A | B | A | B | A | C | C |
| Flexibility | A | - | - | B | D | B | C | - |

These results demonstrate that each of the ink compositions for ink jet textile printing which contained a pigment, a urethane resin emulsion (3.5 to 14 mass%), an emulsion-type silicone compound (0.4 to 3.0 mass%), and water (20 to 80 mass%) (Examples) had satisfactory long-term stability (decreased viscosity of ink and preservation stability of ink) and enabled production of printed fabric having high abrasion resistance and flexibility, as compared with each of the ink compositions prepared in the manner different from that of Examples (Comparative Examples). In addition, each of the white ink compositions containing a urethane resin emulsion, an emulsion-type silicone compound, and water in the same amounts described above (Examples) enabled production of printed fabric having high whiteness and satisfactory white color, as compared with each of the white ink compositions prepared in the manner different from that of Examples (Comparative Examples).

**Claims**

1. An ink composition for ink jet textile printing, the ink composition comprising:

   a pigment;
   a urethane resin emulsion;
   an emulsion-type silicone compound; and

   water, wherein
   the urethane resin emulsion content is 3.5 to 14 mass% relative to the total mass of the ink composition,
   the emulsion-type silicone compound content is in the range of 0.4 to 3.0 mass% relative to the total mass of the ink composition, and
   the water content is in the range of 20 to 80 mass% relative to the total mass of the ink composition.

2. The ink composition for ink jet textile printing according to Claim 1, wherein the emulsion-type silicone compound is at least one material selected from an amino-modified silicone emulsion, an epoxy-modified silicone emulsion, a dimethyl silicone emulsion, and a reactive silicone emulsion.

3. The ink composition for ink jet textile printing according to Claim 1 or Claim 2, wherein the pigment is a white pigment.

4. The ink composition for ink jet textile printing according to any one of Claims 1 to 3, wherein the urethane resin emulsion content is in the range of 7 to 14 mass% relative to the total mass of the ink composition.

5. The ink composition for ink jet textile printing according to any one of Claims 1 to 4, further comprising:

   2-pyrrolidone in an amount of not less than 1 mass% relative to the total mass of the ink composition.

**Patentansprüche**

1. Tintenzusammensetzung für Tintenstrahltextildruck, die Tintenzusammensetzung umfassend:

    ein Pigment;
    eine Urethanharzemulsion;
    eine emulsionsartige Silikonverbindung; und

    Wasser, wobei
    der Urethanharzemulsionsgehalt 3,5 bis 14 Masseprozent relativ zur gesamten Masse der Tintenzusammensetzung ist,
    der emulsionsartige Silikonverbindungsgehalt im Bereich von 0,4 bis 3,0 Masseprozent relativ zur gesamten Masse der Tintenzusammensetzung ist, und
    der Wassergehalt im Bereich von 20 bis 80 Masseprozent relativ zur gesamten Masse der Tintenzusammensetzung ist.

2. Tintenzusammensetzung für Tintenstrahltextildruck nach Anspruch 1, wobei die emulsionsartige Silikonverbindung zumindest ein Material ist, ausgewählt aus einer amino-modifizierten Silikonemulsion, einer epoxy-modifizierten Silikonemulsion, einer Dimethyl-Silikonemulsion und einer reaktiven Silikonemulsion.

3. Tintenzusammensetzung für Tintenstrahltextildruck nach Anspruch 1 oder Anspruch 2, wobei das Pigment ein weißes Pigment ist.

4. Tintenzusammensetzung für Tintenstrahltextildruck nach einem der Ansprüche 1 bis 3, wobei der Urethanharzemulsionsgehalt im Bereich von 7 bis 14 Masseprozent relativ zur gesamten Masse der Tintenzusammensetzung ist.

5. Tintenzusammensetzung für Tintenstrahltextildruck nach einem der Ansprüche 1 bis 4, des Weiteren umfassend:

    2-Pyrrolidon in einer Menge von nicht weniger als 1 Masseprozent relativ zur gesamten Masse der Tintenzusammensetzung.

**Revendications**

1. Composition d'encre pour une impression textile à jet d'encre, la composition d'encre comprenant :

    un pigment ;
    une émulsion de résine uréthane ;
    un composé de silicone de type émulsion ; et

    de l'eau, dans laquelle
    la teneur en émulsion de résine uréthane est de 3,5 à 14 % en masse par rapport à la masse totale de la composition d'encre,
    la teneur en composé de silicone de type émulsion est dans la plage de 0,4 à 3,0 % en masse par rapport à la masse totale de la composition d'encre, et
    la teneur en eau est dans la plage de 20 à 80 % en masse par rapport à la masse totale de la composition d'encre.

2. Composition d'encre pour impression textile à jet d'encre selon la revendication 1,
dans laquelle le composé de silicone de type émulsion est au moins un matériau sélectionné parmi une émulsion de silicone amino-modifié, une émulsion de silicone époxy-modifié, une émulsion de diméthyle-silicone, et une émulsion de silicone réactif.

3. Composition d'encre pour impression textile à jet d'encre selon la revendication 1 ou la revendication 2, dans laquelle le pigment est un pigment blanc.

4. Composition d'encre pour impression textile à jet d'encre selon l'une quelconque des revendications 1 à 3, dans laquelle la teneur en émulsion de résine uréthane est dans la plage de 7 à 14 % en masse par rapport à la masse totale de la composition d'encre.

**5.** Composition d'encre pour impression textile à jet d'encre selon l'une quelconque des revendications 1 à 4, comprenant en outre :

de la 2-pyrrolidone selon une quantité non inférieure à 1 % en masse par rapport à la masse totale de la composition d'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008095089 A
- JP 10501006 T

- JP 2006124855 A